# EUROPÄISCHE PATENTSCHRIFT

(11) **EP 0 706 069 B1**
(45) Veröffentlichungstag und Bekanntmachung des Hinweises auf die Patenterteilung: **02.04.2003**
(21) Anmeldenummer: 95115157.0
(22) Anmeldetag: 26.09.1995
(51) Int. Cl.: G02B 6/42

(54) **Sende- und Empfangsmodul für eine bidirektionale optische Nachrichten- und Signalübertragung**
Transmitting and receiving module for bidirectional optical communication and signal transmission
Module d'émission et de réception pour la transmission optique bidirectionnelle de communication et de signal

(30) Priorität: 06.10.1994 DE 4435768
(43) Veröffentlichungstag der Anmeldung: 10.04.1996
(73) Patentinhaber: Infineon Technologies AG, 81669 München (DE)
(72) Erfinder: Althaus, Hans-Ludwig, Dr., D-93138 Lappersdorf (DE); Hartl, Alfred, D-93186 Pettendorf (DE); Krug, Joachim, D-93073 Neutraubling (DE); Kuhn, Gerhard, Dr., D-93096 Köfering (DE)
(74) Vertreter: Müller, Wolfram Hubertus, Dr. Dipl.-Phys.

(56) Entgegenhaltungen:
- EP-A- 0 400 161
- EP-A- 0 463 214
- EP-A- 0 542 011
- WO-A-89/08277
- US-A- 4 981 335
- PATENT ABSTRACTS OF JAPAN vol. 011 no. 170 (P-581) ,2.Juni 1987 & JP-A-62 002217 (FUJITSU LTD) 8.Januar 1987,

## Beschreibung

Die Erfindung betrifft einen Sende- und Empfangsmodul für eine bidirektionale optische Nachrichten- und Signalübertragung nach dem Oberbegriff des Anspruchs 1.

Ein derartiger bidirektionaler Modul mit freier Strahlführung ist aus der EP-A-238 977 bekannt. Bei diesem Sendeund Empfangsmodul für ein bidirektionales Kommunikationsnetz sind im wesentlichen zwischen einer Laserdiode und einem Lichtleitfaserende zwei Kugellinsen im Abstand voneinander angeordnet, die das Laserlicht auf das Faserende fokussieren. Zwischen den Kugellinsen ist eine Lichtstrahltrenneinrichtung bzw. ein Strahlteiler angeordnet, der ein vom Faserende in Richtung der senderfernen Linse divergent abgestrahltes und von dieser Linse gebündeltes Licht mit einer von der Wellenlänge des Laserlichts verschiedenen Wellenlänge von dem Strahlengang trennt und einem Detektor bzw. Lichtempfänger zuleitet.

Eine spezielle Ausführung eines solchen Moduls, bei dem Lichtsender und Lichtempfänger jeweils ein eigenständiges Bauelement bildend von einer hermetischen Einkapselung umgeben in ein gemeinsames Gehäuse mit dem Strahlteiler eingefügt sind, ist in der EP-A-463 214 beschrieben.

Zudem ist aus der EP-A-400 161 bekannt, bei einer Anordnung zum optischen Koppeln eines elektrooptischen Wandlermoduls mit einem Lichtwellenleiter mittels zweier Linsen, von denen eine erste vor dem Wandlermodul und eine zweite vor dem Lichtwellenleiter angeordnet ist, störende Rückreflexe zu verringern, ohne den Koppelwirkungsgrad der Anordnung zu mindern. Dabei ist die optische Achse der ersten Linse gegenüber der optischen Achse des Wandlermoduls und die optische Achse der zweiten Linse gegenüber der optischen Achse des Lichtwellenleiters axial versetzt, und die optischen Achsen der ersten Linse und der zweiten Linse sind zueinander axial versetzt.

Die in Modulen mit optischen Freistrahlführungen an den optischen Grenzflächen immer auftretenden Reflexionsanteile, die die transportierte Lichtleistung reduzieren, kann man bekanntermaßen auch durch Vergüten der optischen Grenzflächen auf Anteile ≤1% reduzieren.

Bei einem elektrooptischen bidirektionalen Modul treten trotzdem zwei Probleme besonderer Art auf, die die Leistungsfähigkeit des Moduls negativ beeinträchtigen, und zwar sind zum einen hochleistungsfähige Laserdioden als Lichtsender extrem empfindlich gegen kleinste rückgekoppelte (≤0,01% ≙ ≤-40dB) Lichtanteile und reagieren mit erhöhtem Rauschen, zum anderen tragen bei bidirektionalen Modulen, insbesondere bei Modulen, die mit einer Wellenlänge arbeiten, alle reflektierten Lichtanteile (<1% ≙ < -20dB), die in den optischen Strahlengang treffen, wesentlich zum unerwünschten Übersprechen zwischen Sende- und Empfangskanal bei.

Auch diesen Problemen versuchte man bisher dadurch beizukommen, daß man alle optischen Grenzflächen mit einer möglichst guten und damit aufwendigen Vergütung versieht. Diese Vergütungen sind aber insbesondere auf Fasergrenzflächen sehr schwierig oder aufwendig aufzubringen. Insbesondere liegen u.a. die Fasergrenzflächen gerade in dem optisch empfindlichsten fokussierten Strahlbereich, wo die Rückreflexion in den optischen Strahlengang am größten ist. Außerdem reicht die durch das Vergüten reduzierte Reflexion (<1%) nicht aus, um die volle Leistungsfähigkeit des jeweiligen Moduls zu erreichen.

Der Erfindung liegt die Aufgabe zugrunde, einen bidirektionalen Sende- und Empfangsmodul zu schaffen, bei dem bei optimalem Koppelwirkungsgrad sowohl die störenden Rückreflexionen als auch das unerwünschte Übersprechen wesentlich reduziert sind.

Diese Aufgabe wird erfindungsgemäß durch einen Sende- und Empfangsmodul mit den Merkmalen des Anspruchs 1 gelöst.

Vorteilhafte Ausgestaltungen bzw. Weiterbildungen der Erfindung sind Gegenstand zusätzlicher Ansprüche.

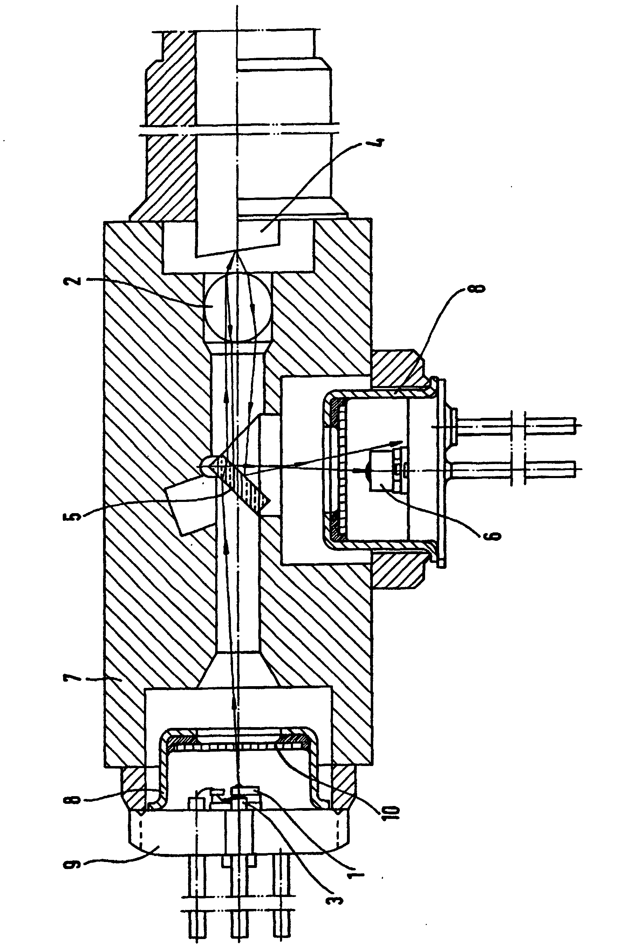

Die mit der Erfindung erzielten Vorteile bestehen insbesondere darin, daß einerseits das Rauschen des Lichtsenders durch Rückreflexionen verhindert ist, und daß andererseits das Problem des Übersprechens zwischen Lichtsender und Lichtempfänger minimiert (<-30dB) ist. Diese beiden wesentlichen Vorteile ergänzen sich gegenseitig. Wenn nämlich die nichtaxiale Strahlgeometrie in Lichtsenderichtung auf optimale Lichteinkopplung eingestellt ist, ist auch gleichzeitig der rückgekoppelte Lichtanteil auf die Empfängerdiode minimal. Von weiterem Vorteil ist, daß durch die vorgesehene optische Strahlführung ein symmetrischer und damit kostengünstiger Modulaufbau der Einzelelemente im Inneren des Modulgehäuses ermöglicht wird. Anhand eines in der Figur der Zeichnung dargestellten, bevorzugten Ausführungsbeispiels wird die Erfindung im folgenden näher erläutert.

Der in der Figur dargestellte bidirektionale Sende- und Empfangsmodul besteht im wesentlichen aus einem eine erste Linsenkoppeloptik 1 aufweisenden Lichtsender 3, vorzugsweise einer Laserdiode, einem Lichtempfänger 6, beispielsweise einer Fotodiode, einem eine zweite Linsenkoppeloptik 2 aufweisenden Faseranschluß 4 mit einer gemeinsame Lichtleitfaser und einem im freien Strahlengang zwischengeordneten Strahlteiler 5, die von einem gemeinsamen Gehäuse 7 umgeben sind. Lichtsender 3, Strahlteiler 5 und Faseranschluß 4 sowie zu diesen orthogonal der Lichtempfänger 6 sind axialsymmetrisch angeordnet.

Der Strahlteiler 5 ist zweckmäßig an der Innenwand des Gehäuses 7 befestigt. Die zweite Linsenkoppeloptik 2, zweckmäßig eine Kugellinse, ist vor dem Faseranschluß 4 an der Innenwand des Gehäuses 7 justiert und befestigt.

Der Lichtsender 3 und der Lichtempfänger 6 sind vorzugsweise jeweils ein eigenständiges Bauelement bildend von einer hermetisch dichten Einkapselung 8 umgeben in das gemeinsame Gehäuse 7 eingebaut.

Die erste Linsenkoppeloptik 1 ist in diesem bevorzugten Ausführungsbeispiel in Form einer in ein Trägerplättchen, beispielsweise ein Siliziumplättchen, integrierten konvexen Linse vor dem Lichtsender 3 befestigt.

Die optische Achse der ersten Linsenkoppeloptik 1 ist gegenüber der optischen Achse des Lichtsenders 3 und die optische Achse der zweiten Linsenkoppeloptik 2 gegenüber der optischen Achse des Faseranschlusses 4 axial so versetzt, die Stirnfläche des Faseranschlusses 4 weist zu dessen optischer Achse bei optimaler Lichteinkopplung einen solchen Neigungswinkel auf und der Strahlteiler 5 ist zu der Symmetrieachse der Anordnung so geneigt, daß die rückreflektierte Strahlung weder auf den strahlungsaktiven Teil des Lichtsenders 3 noch auf den strahlungsempfindlichen Teil des Lichtempfängers 6 trifft.

Die freie Strahlführung zwischen den elektrooptischen Komponenten wie Lichtsender 3, Lichtempfänger 6 und Faseranschluß 4 liegt demnach nicht in der optischen Achse der Einzelkomponenten, die durch ihre geometrische Symmetrie bestimmt ist. Das bedeutet, daß die Linsenkoppeloptik 1 vor dem Lichtsender 3 seitlich aus der Strahlachse dejustiert und fixiert ist, so daß die aus der Linsenkoppeloptik 1 austretende Strahlung das eigenständigen Sendergehäuseteil 9 unter einem Kippwinkel gegen die mechanische Achse von vorzugsweise ungefähr 3° verläßt. Damit trifft diese Strahlung auch nicht mehr senkrecht auf das Fenster 10 des Sendergehäuseteils 9 und wird auch nicht mehr auf den Lichtsender 3 selbst rückreflektiert. Diese unter dem Kippwinkel von ungefähr 3° weitergeführte Strahlung trifft dann so gerichtet auf den Strahlteiler 5, daß diese wieder zur Achse des gemeinsamen Gehäuses 7 zurückgebrochen wird. Hierdurch wird vermieden, daß durch den vorgewählten Kippwinkel ein teueres, nichtsymmetrisches Gehäuse notwendig wird. Das heißt, das gemeinsame Gehäuse 7 kann bei der angegebenen Optik symmetrisch bleiben.

In der weiteren Strahlführung zur Einkopplung bzw. Abbildung durch die Linsenkoppeloptik 2 wird die Strahlung so durch die Linse 2 geführt, daß diese in Strahlrichtung hinter dieser Linse 2 einen negativen Kippwinkel gegen die mechanischer Achse (Symmetrieachse) von ungefähr 5,5° erfährt. Damit wird die Strahlung in ihren Brennpunkt wieder zur Symmetrieachse zurückgelenkt und trifft an dieser Stelle auf die reflektionsintensive Stirnfläche des Faseranschlusses 4. Diese ist nun an den Kippwinkel von ungefähr -5,5° angepaßt um etwa 12° gegen die Senkrechte zur optischen Achse geneigt. Damit wird, dem Brechungsgesetz folgend, der maximale Lichtanteil des Licht- bzw. Laserstrahls in die Faser eingekoppelt, d.h. nahezu der gleiche Lichtanteil wie bei senkrechtem Eintreffen auf die Faserstirnfläche.

Die schräge bzw. geneigte Stirnfläche des Faseranschlusses 4, die üblicherweise schon in anderen Lichtwellenleiterbauelementen die Rückreflektion auf die Laserdiode oder in die Strecke zurück verhindert, trägt hier bei einem bidirektionalen Modul nicht nur zur Beseitigung der Rückreflexionen, sondern auch zum Verhindern des Übersprechens bei. Zum einen wird durch den Neigungswinkel der Faserstirnfläche die eintreffende schräge Strahlung um ihren doppelten Winkel aus der optischen Achse reflektiert und damit wirksam auch aus der optischen Achse zum Lichtsender 3 entfernt. Zum anderen wird aber auch der reflektierte Anteil durch den doppelten Reflexionswinkel zum Einfallswinkel aus dem Empfangsbereich des Lichtempfängers 6 reflektiert. Damit ist einerseits das Rauschen des Lichtsenders 3 durch Rückreflexion verhindert und andererseits das Übersprechen zwischen Lichtsender 3 und Lichtempfänger 6 minimiert.

## Patentansprüche

1. Sende- und Empfangsmodul für eine bidirektionale optische Nachrichten- und Signalübertragung mit einem eine erste Linsenkoppeloptik aufweisenden Lichtsender, einem Lichtempfänger, einem eine zweite Linsenkoppeloptik aufweisenden Faseranschluß mit einer gemeinsamen Lichtleitfaser und einem im freien Strahlengang zwischengeordneten Strahlteiler, die von einem gemeinsamen Gehäuse (7) umgeben sind, wobei Lichtsender, Strahlteiler und Faseranschluß auf der Achse einer zentrallen Bohrung des gemeinsamen Gehäuses (7) sowie hierzu orthogonal der Lichtempfänger angeordnet sind, und wobei die Strahlachse des Lichtsenders (3) und die Achse des Faseranschlusses (4) beide auf der Achse der Bohrung (7) liegen,
**dadurch gekennzeichnet,**
**daß** die optische Achse der ersten Linsenkoppeloptik (1) gegenüber der Strahlachse des Lichtsenders (3) und die optische Achse der zweiten Linsenkoppeloptik (2) gegenüber der Achse des Faseranschlusses (4) parallel versetzt sind, die Stirnfläche der Faser zu deren optischer Achse einen Neigungswinkel zur optimalen Lichteinkopplung aufweist und der Strahlteiler (5) zu der Achse der Bohrung geneigt ist, derart daß die an der Faserstirnfläche rückreflektierte Strahlung weder auf den strahlungsaktiven Teil des Lichtsenders (3) noch auf den strahlungsempfindlichen Teil des Lichtempfängers (6) trifft, wobei die erste Linsen Koppeloptik (1) und die Neigung des Strahlteilers (6) derart angeordnet sind, daß die Strahlung des Lichtsenders (3) vom Strahlteiler (5) zur Achse der Bohrung (7) hin gebrochen wird.

2. Modul nach Anspruch 1, **dadurch gekennzeichnet, daß** der Strahlteiler (5) an der Innenwand des Gehäuses (7) befestigt ist.

3. Modul nach Anspruch 1 oder 2, **dadurch gekennzeichnet, daß** die zweite Linsenkoppeloptik (2) in Form einer Kugellinse vor dem Faseranschluß (4) an der Innenwand des Gehäuses (7) justiert und fixiert ist.

4. Modul nach einem der Ansprüche 1 bis 3, **dadurch gekennzeichnet, daß** der Lichtsender (3) und der Lichtempfänger (6) jeweils ein eigenständiges Bauelement bildend von einer hermetisch dichten Einkapselung (8) umgeben in das gemeinsame Gehäuse (7) eingefügt sind.

5. Modul nach einem der Ansprüche 1 bis 4, **dadurch gekennzeichnet, daß** die erste Linsenkoppeloptik (1) in Form einer in ein Trägerplättchen integrierten Linse vor dem Lichtsender (3) befestigt ist.

6. Modul nach einem der Ansprüche 1 bis 5, **dadurch gekennzeichnet, daß** die optische Achse der ersten Linsenkoppeloptik (1) gegenüber der Strahlachse des Lichtsenders (3) und die optische Achse der zweiten Linsenkoppeloptik (2) gegenüber der optischen Achse des Faseranschlusses (4) so versetzt sind, daß die vom Lichtsender (3) erzeugte divergente Strahlung unter einem ersten Kippwinkel von ungefähr 3° von der Symmetrieachse der Anordnung weg aus der ersten Linsenkoppeloptik (1) und unter einem zweiten Kippwinkel von ungefähr 5,5° zur Achse der Bohrung (7) hin aus der zweiten Linsenkoppeloptik (2) austritt, und daß die Stirnfläche der Faser an den zweiten Kippwinkel angepaßt in einem Neigungswinkel von ungefähr 12° gegen die Senkrechte zur Achse geneigt ist.

## Claims

1. Transmitting and receiving module for bidirectional optical message and signal transmission comprising an optotransmitter having a first lens coupling optics, an optoreceiver, a fibre connection having a second lens coupling optics, and comprising a common optical fibre, and a beam splitter which is arranged intermediately in the free beam path, which are surrounded by a common housing (7), the optotransmitter, beam splitter and fibre connection being arranged on the axis of a central bore of the common housing (7), and the optoreceiver being arranged orthogonal thereto and the beam axis of the optotransmitter (3) and the axis of the fibre connection (4) both being situated on the axis of the bore (7), **characterized in that** the optical axis of the first lens coupling optics (1) is offset in parallel from the beam axis of the optotransmitter (3) and the optical axis of the second lens coupling optics (2) is offset in parallel from the axis of the fibre connection (4), the end face of the fibre has, relative to the optical axis thereof, an angle of inclination for optimal light launching, and the beam splitter (5) is inclined to the axis of the bore in such a way that the radiation retroreflected at the fibre end face strikes neither the radiation-active part of the optotransmitter (3) nor the radiation-sensitive part of the optoreceiver (6), the first lens coupling optics (1) and the inclination of the beam splitter (5) being arranged in such a way that the radiation of the optotransmitter (3) is interrupted by the beam splitter (5) in a direction of the axis of the bore (7).

2. Module according to Claim 1, **characterized in that** the beam splitter (5) is fastened on the inner wall of the housing (7).

3. Module according to Claim 1 or 2, **characterized in that** the second lens coupling optics (2) is adjusted and fixed on the inner wall of the housing (7) in the form of a spherical lens in front of the fibre connection (4).

4. Module according to one of Claims 1 to 3, **characterized in that** the optotransmitter (3) and the optoreceiver (6) are inserted, surrounded by a hermetically tight encapsulation (8), in a way forming an independent component in each case, in the common housing (7).

5. Module according to one of Claims 1 to 4, **characterized in that** the first lens coupling optics (1) is fastened in front of the optotransmitter (3) in the form of a lens integrated in a support platelet.

6. Module according to one of Claims 1 to 5, **characterized in that** the optical axis of the first lens coupling optics (1) is offset from the beam axis of the optotransmitter (3), and the optical axis of the second lens coupling optics (2) is offset from the optical axis of the fibre connection (4) such that the divergent radiation produced by the optotransmitter (3) emerges from the first lens coupling optics (1) at a first tilting angle of approximately 3° away from the axis of symmetry of the arrangement, and emerges from the second lens coupling optics (2) at a second tilting angle of approximately 5.5° away from the axis of the bore (7), and **in that** the end face of the fibre is inclined, matched to the second tilting angle, at an angle of the inclination of approximately 12° to the vertical to the axis.

## Revendications

1. Module d'émission et de réception pour la transmission optique bidirectionnelle de communication et de signal, comprenant un émetteur de lumière ayant une première optique de couplage à lentille, un récepteur de lumière, une sortie à fibre ayant une deuxième optique de couplage à lentille et une fibre optique commune et un diviseur de faisceau interposé dans le trajet libre du faisceau, qui sont entourés d'un boîtier (7) commun, l'émetteur de lumière, le diviseur de faisceau et la sortie à fibre étant disposés sur l'axe d'un trou commun du boîtier (7) commun, et le récepteur de lumière étant disposé orthogonalement à cet axe et l'axe de faisceau de l'émetteur (3) de lumière et l'axe de la fibre de sortie (4) se trouvant tous les deux sur l'axe du trou,
**caractérisé**
**en ce que** l'axe optique de la première optique (1) de couplage à lentille est décalé parallèlement par rapport à l'axe du faisceau de l'émetteur (3) de lumière et l'axe optique de la deuxième optique (2) de couplage à lentille est décalé parallèlement par rapport à l'axe de la fibre de sortie (4), la surface frontale de la fibre a, par rapport à son axe optique, un angle d'inclinaison qui est le meilleur pour l'injection de lumière et le diviseur (5) de faisceau est incliné par rapport à l'axe du trou de façon à ce que le rayonnement réfléchi sur la surface frontale de la fibre n'arrive ni sur la partie active du point de vue du rayonnement de l'émetteur (3) de lumière ni sur la partie sensible au rayonnement du récepteur (6) de lumière, la première optique (1) de couplage à lentille et l'inclinaison de l'axe du faisceau faisant que le rayonnement de l'émetteur (3) de lumière est divisé par le diviseur (5) de faisceau par rapport à l'axe du trou (7).

2. Module suivant la revendication 1, **caractérisé en ce que** le diviseur (5) de faisceau est fixé à la paroi intérieure du boîtier (7).

3. Module suivant la revendication 1 ou 2, **caractérisé en ce que** la deuxième optique (2) de couplage à lentille est ajustée et immobilisée sous la forme d'une lentille sphérique en avant de la fibre de sortie (4) sur la paroi intérieure du boîtier (7).

4. Module suivant l'une des revendications 1 à 3, **caractérisé en ce que** l'émetteur (3) de lumière et le récepteur (6) de lumière sont insérés dans le boîtier (7) commun en formant respectivement un composant autonome entouré d'un encapsulage (8) hermétiquement étanche.

5. Module suivant l'une des revendications 1 à 4, **caractérisé en ce que** la première optique (1) de couplage à lentille est fixée en avant de l'émetteur (3) de lumière sous la forme d'une lentille intégrée dans une plaquette support.

6. Module suivant l'une des revendications 1 à 5, **caractérisé en ce que** l'axe optique de la première optique (1) de couplage à lentille est décalé par rapport à l'axe du faisceau de l'émetteur (3) de lumière et l'axe optique de la deuxième optique (2) de couplage à lentille est décalé par rapport à l'axe optique de la fibre de sortie (4) de façon à ce que le rayonnement divergent produit par l'émetteur (3) de lumière s'écarte d'un premier angle de 3° environ de l'axe de symétrie du dispositif en sortant de la première optique (1) de couplage à lentille et sorte en faisant un deuxième angle d'environ 5,5° par rapport à l'axe du trou (7) de la deuxième optique (2) de couplage à lentille et **en ce que** la surface frontale de la fibre est inclinée par rapport à l'axe en étant adaptée au deuxième angle d'un angle d'inclinaison d'environ 12° par rapport à la perpendiculaire.
